# EUROPÄISCHE PATENTSCHRIFT

(11) **EP 3 421 762 B1**
(45) Veröffentlichungstag und Bekanntmachung des Hinweises auf die Patenterteilung: **02.03.2022**
(21) Anmeldenummer: 18175952.3
(22) Anmeldetag: 05.06.2018
(51) Int. Cl.: F02D 41/00, B60W 20/00, F02B 37/14, F02B 37/18, F02D 13/02, F02D 23/02, B60K 6/485, B60W 10/06, B60W 10/08, B60W 20/10, B60W 30/188, F01N 5/04, F02B 37/00, F02B 39/10, F02B 37/10

(54) **AUFGELADENE BRENNKRAFTMASCHINE**
SUPERCHARGED INTERNAL COMBUSTION ENGINE
MOTEUR À COMBUSTION INTERNE SURCHARGÉ

(30) Priorität: 30.06.2017 DE 102017114723
(43) Veröffentlichungstag der Anmeldung: 02.01.2019
(73) Patentinhaber: MAN Truck & Bus SE, 80995 München (DE)
(72) Erfinder: Weiß, Joachim, 90522 Oberasbach (DE)
(74) Vertreter: v. Bezold & Partner Patentanwälte - PartG mbB

(56) Entgegenhaltungen:
- EP-A2- 0 945 606
- WO-A1-2008/079180
- US-A1- 2007 144 175
- US-A1- 2016 195 047

## Beschreibung

Die vorliegende Erfindung betrifft eine Brennkraftmaschine, beispielsweise zum Antrieb eines Fahrzeugs. Insbesondere ist eine Brennkraftmaschine mit Miller'schen oder Atkinson'schen Schließzeiten beschrieben.

Bereits wenige Jahre nach den grundlegenden Erfindungen zum Viertaktprinzip von A. E. Beau de Rochas und N. A. Otto wurden vom Unteren Totpunkt (UT) stark abweichende Schließzeiten des Einlassventils eingesetzt, damit sich das Verbrennungsgas durch einen im Vergleich zur Verdichtung längeren Expansionshub weiter entspannt, stärker abkühlt und somit die im Gas enthaltene Energie besser ausgenützt wird. Insbesondere ist seit Langem bekannt, dass sich durch sehr frühes Schließen (vor dem UT) oder sehr spätes Schließen (beispielsweise mehr als 40° nach dem UT) des Einlassventils nach R. Miller bzw. nach J. Atkinson hohe spezifische Lasten (d.h. die abgegebene mechanische Leistung im Verhältnis zur Kraftstoffrate) mit geringeren Spitzendrücken (d.h., dem Maximum des Zylinderdrucks im Zyklus nach dem Oberen Totpunkt des Zündens) als bei herkömmlichen Steuerzeiten erreichen lassen. Sofern gute Wirkungsgrade des Aufladesystems gegeben sind, kann dabei auch der spezifische Kraftstoffverbrauch (d.h. der Kehrwert der spezifischen Last) gesenkt werden. Gleichzeitig ergeben sich durch niedrigere Prozesstemperaturen geringere Stickoxidemissionen.

Diese Vorteile sind vor allem im Bereich hoher Leistungen anzutreffen. Im Bereich mittlerer und niedriger Leistungen überwiegen die Nachteile durch die niedrigeren Liefergrade, die dort noch nicht durch eine effiziente Aufladung kompensiert werden. Im Allgemeinen erfolgt die Anwendung der Miller'schen oder Atkinson'schen Steuerzeiten daher in Kombination mit einem variablen Ventiltrieb, der eine Umschaltung oder Veränderung der Steuerzeiten zwischen den Leistungsbereichen erlaubt. Das Dokument WO 2001/21939 A2 beschreibt einen hydraulischen Mechanismus zum Betrieb eines Ventils einer Brennkraftmaschine, der einen Miller-Zyklus unter Teillast und ein Ausschalten des Miller-Zyklus unter Volllast ermöglicht. Das Dokument DE 10 2007 022 145 A1 beschreibt einen umschaltbaren Ventiltrieb einer Brennkraftmaschine mit einem auf der Nockenwelle axial verschieblichen Nocken.

Das Dokument EP 0 945 606 A2 beschreibt eine Erdgas-Brennkraftmaschine mit Turbolader, deren Ansaugventil in Abhängigkeit der Temperatur der Brennkammer und/oder der Ansaugluft gesteuert wird, so dass das Ansaugventil bei geringerer Temperatur als einer festgelegten Schwellentemperatur nahe am unteren Totpunkt der Kompressionsphase geschlossen wird, während das Ansaugventil bei höherer Temperatur als der festgelegten Schwellentemperatur während eines Teils der Kompressionsphase geöffnet bleibt.

Das Dokument US 2007/144175 A1 beschreibt eine Brennkraftmaschine mit einem oder mehreren Turboladern, bei der die Öffnungszeiten des Ansaugventils aufgrund von Motorbedingungen wie Motorgeschwindigkeit, Last, Druck oder Temperatur angepasst werden können. Das Dokument WO 2008/079180 A1 beschreibt - bis auf die Nummerierung der Figuren - wortgleich die gleiche Steuerung der Öffnungszeiten des Ansaugventils wie das Dokument US 2007/144175 A1.

Jedoch sind solche umschaltbaren Ventiltriebe mit einer aufwändigen Steuermechanik verbunden, welche die Herstellungskosten der Brennkraftmaschine erhöhen, deren Bauraum vergrößern und/oder die Zuverlässigkeit der Brennkraftmaschine mindern.

Somit besteht die Aufgabe, eine Brennkraftmaschine anzugeben, welche auch ohne einen umschaltbaren Ventiltrieb die Vorteile außerhalb des UT schließender Einlassventile nutzbar macht.

Diese Aufgabe wird durch eine Brennkraftmaschine und ein entsprechendes Kraftfahrzeug mit den Merkmalen der unabhängigen Ansprüche gelöst. Vorteilhafte Ausführungsformen und Anwendungen der Erfindung zum Gegenstand der abhängigen Ansprüche werden in der folgenden Beschreibung unter teilweiser Bezugnahme auf die Figuren näher erläutert.

Gemäß einem Aspekt der Erfindung wird eine Brennkraftmaschine gemäß Anspruch 1 bereitgestellt.

Der generatorische Betrieb im zweiten Lastbereich kann zeitweise vorliegen. Ein vorübergehender motorischer Betrieb kann auch im zweiten Lastbereich erfolgen.

Hierbei kann die Last durch die mechanische Leistung und/oder das Drehmoment der Brennkraftmaschine (beispielsweise an einer Kurbelwelle der Brennkraftmaschine) bestimmt sein. Insbesondere können die ersten und zweiten Lastbereiche auch als erster bzw. zweiter Leistungsbereich bezeichnet werden. Hierbei können "Last" und "Drehmoment" als analoge oder austauschbare Begriffe verstanden werden. Ferner kann, da die "Leistung" proportional zum Produkt aus Drehzahl und Drehmoment ist, auch der Begriff der "Leistung" eindeutig mit dem "Drehmoment" verknüpft sein, beispielsweise indem eine typische oder mittlere Drehzahl zur prinzipiellen Unterscheidung der Betriebszustände des Motors hergezogen wird. Die Last kann sich auf die Brennkraftmaschine ohne den Beitrag einer eventuell auch auf die Kurbelwelle wirkenden Elektromaschine beziehen.

Die Brennkraftmaschine kann ein Verbrennungsmotor, insbesondere ein Hubkolbenmotor, sein. Die Brennkraftmaschine kann ein Viertaktmotor sein, insbesondere ein Ottomotor oder ein Dieselmotor.

Die Brennkraftmaschine kann ohne eine Abgasrückführung (AGR) ausgeführt sein. Beispielsweise kann eine AGR aufgrund der Schließzeiten der Ventilsteuerung der Brennkraftmaschine vermieden werden.

Die Steuerungseinheit kann ferner dazu ausgebildet sein, die Elektromaschine des elektrifizierten Abgasturboladers im ersten und/oder zweiten Lastbereich mechanisch abzukoppeln und/oder stromlos (d.h. elektrisch funktionslos, weder generatorisch noch motorisch) zu betreiben. Die Steuerungseinheit kann die Elektromaschine des elektrifizierten Abgasturboladers im ersten Lastbereich der Brennkraftmaschine zeitweise und/oder überwiegend motorisch betreiben. Alternativ oder ergänzend kann die Steuerungseinheit die Elektromaschine des elektrifizierten Abgasturboladers im zweiten Lastbereich zeitweise und/oder überwiegend generatorisch betreiben.

Erfindungsgemäß ist die Steuerungseinheit dazu ausgebildet, die Elektromaschine des elektrifizierten Abgasturboladers im ersten Lastbereich nicht generatorisch zu betreiben. Die Steuerungseinheit kann dazu ausgebildet sein, die Elektromaschine des elektrifizierten Abgasturboladers ausschließlich im ersten Lastbereich motorisch zu betreiben. Erfindungsgemäßist die Steuerungseinheit dazu ausgebildet, die Elektromaschine des elektrifizierten Abgasturboladers ausschließlich im zweiten Lastbereich generatorisch zu betreiben.

Ferner kann die Steuerungseinheit dazu ausgebildet sein, die Elektromaschine des elektrifizierten Abgasturboladers im ersten Lastbereich weder motorisch noch generatorisch einzusetzen. Beispielsweise kann die Steuerungseinheit zur Vermeidung eines Turbolochs (d.h. wenn die Brennkraftmaschine ein hohes Drehmoment abgeben soll, es aber noch nicht kann, weil nicht genug Verbrennungsluft vorhanden ist) im zweiten Lastbereich den motorischen Betrieb des elektrifizierten Abgasturboladers vorübergehend bewirken.

Der Abgasturbolader kann einen Verdichter zum Erzeugen eines Ladedrucks der Brennkraftmaschine und eine den Verdichter antreibende Turbine umfassen. Die Einlassventile der Brennkraftmaschine können über einen Ladeluftkühler in Fluidverbindung mit dem Verdichter des Abgasturboladers stehen. Die Turbine und/oder der Verdichter können dazu ausgelegt sein, einen Ladedruck zu erzeugen, der ein aufgrund der Schließzeiten gegenüber dem Hubraum verringertes Ladevolumen im ersten Lastbereich der Brennkraftmaschine kompensiert.

Kompensieren kann hierbei ein Überkompensieren einschließen, beispielsweise im motorischen Betrieb der Elektromaschine des Abgasturboladers. Der Ladedruck des Abgasturboladers im ersten Lastbereich und das aufgrund der Schließzeiten verringerte Ladevolumen können einer Luftmasse entsprechen, die gleich oder größer ist als eine Luftmasse, die dem Umgebungsdruck (beispielsweise dem Normaldruck) und dem Hubraum der Brennkraftmaschine entspricht, beispielsweise jeweils bei gleicher Temperatur.

Beispielsweise kann der Abgasturbolader so dimensioniert sein, dass der Ladedruck im ersten Lastbereich eine Verringerung des Liefergrades aufgrund der Schließzeiten kompensiert. Ein Turbinenquerschnitt der Turbine kann derart bemessen sein und/oder eine Turbinengeometrie der Turbine kann derart geformt sein, dass der Abgasturbolader im ersten Lastbereich das durch die Schließzeiten verringerte Ladevolumen durch den Ladedruck kompensiert. Der Abgasturbolader kann (beispielsweise hinsichtlich der Turbinengeometrie und/oder des Turbinenquerschnitts) dazu ausgebildet sein, angetrieben vom Abgasstrom (beispielsweise dem Abgasdruck des Abgasstroms der Brennkraftmaschine) im ersten Lastbereich das aufgrund der Schaltzeiten verringerte Ladevolumen durch den Ladedruck zu kompensieren. Der Abgasturbolader kann dazu ausgebildet sein, allein durch den Abgasstrom und/oder ohne den motorischen Betrieb der Elektromaschine des Abgasturboladers bei hohen Lasten innerhalb des ersten Lastbereichs oder beim Übergang vom ersten zum zweiten Lastenbereich das aufgrund der Schaltzeiten verringerte Ladevolumen durch den Ladedruck zu kompensieren.

Die Turbine, insbesondere der Turbinenquerschnitt und/oder die Turbinengeometrie, können im ersten Lastbereich und im zweiten Lastbereich gleich sein. Die Turbine, insbesondere der Turbinenquerschnitt und/oder die Turbinengeometrie, können unveränderlich sein.

Die Steuerungseinheit kann dazu ausgebildet sein, im zweiten Lastbereich eine mechanische Leistung der Turbine, welche über die durch den Verdichter zur Kompensation benötigte Leistung hinausgeht, mittels der generatorisch betriebenen Elektromaschine umzusetzen. Die im zweiten Lastbereich generatorisch betriebene Elektromaschine kann zumindest einen Teil der vom Verdichter nicht benötigten Leistung umsetzen. Die notwendige Turbinenleistung kann diejenige sein, die im stationären Betrieb der Brennkraftmaschine benötigt wird, um den Ladedruck zu erzeugen, mit dem sich das im jeweiligen Betriebspunkt geforderte Verbrennungsluftverhältnis realisieren lässt. Die über diese notwendige Turbinenleistung hinausgehende Leistungsabgabe der Turbine kann als Leistungsüberschuss der Elektromaschine im generatorischen Betrieb zugeführt werden.

Die Elektromaschine des Abgasturboladers kann starr mit der Turbine und/oder dem Verdichter des Abgasturboladers gekoppelt sein. Die Steuerungseinheit kann ferner dazu ausgebildet sein, die Elektromaschine des Abgasturboladers im ersten Lastbereich von einer gemeinsamen Welle (der Turbine und des Verdichters) abzukoppeln, beispielsweise um Verluste der Leistungselektronik zu verringern.

Erfindungsgemäß sind die Schließzeiten der Ventilsteuerung unveränderlich. Die Brennkraftmaschine umfasst keine variable Ventilsteuerung.

Die Schließzeiten und die Ventilsteuerung sind im ersten Lastbereich und im zweiten Lastbereich gleich.

Die Schließzeiten können relativ zum Zyklus der Brennkraftmaschine (beispielsweise zur Drehstellung der Nockenwelle und/oder einem Zustand im rechtslaufenden thermodynamischen Kreisprozess) bestimmt sein.

Erfindungsgemäß umfasst die Ventilsteuerung eine von einer Kurbelwelle der Brennkraftmaschine angetriebene Nockenwelle, welche die Schließzeiten bestimmt. Erfindungsgemäß legt die Nockenwelle die Schließzeiten für den gesamten Lastbereich der Brennkraftmaschine einheitlich fest. Eine Nockenwellenverstellung wird vermieden.

Die Brennkraftmaschine kann ferner einen wiederaufladbaren elektrischen Energiespeicher umfassen, welcher mit der Elektromaschine des elektrifizierten Abgasturboladers zum Speichern der im generatorischen Betrieb abgegebenen elektrischen Energie verbunden oder verbindbar ist. Die Elektromaschine des elektrifizierten Abgasturboladers und der wiederaufladbaren Energiespeicher können über ein Gleichspannungsnetz, beispielsweise ein 48-Volt-Netz, verbunden sein.

Die Brennkraftmaschine kann ferner eine zweite Elektromaschine umfassen, die als Kraftmaschine dazu ausgebildet ist, vom elektrifizierten Abgasturbolader im zweiten Leistungsbereich abgegebene elektrische Energie umzusetzen. Die zweite Elektromaschine kann starr mit der Kurbelwelle der Brennkraftmaschine verbunden sein. Beispielsweise kann die zweite Elektromaschine durch einen Kurbelwellen-Startergenerator realisiert sein. Die Brennkraftmaschine kann ein Hybridantrieb oder Bestandteil eines Hybridantriebs sein.

Die Steuerungseinheit kann ferner dazu ausgebildet sein, die zweite Elektromaschine zur Leistungsversorgung durch die generatorisch betriebene Elektromaschine des elektrifizierten Abgasturboladers mit dieser zu verbinden. Die zweite Elektromaschine kann direkt von der generatorisch betriebenen Elektromaschine des elektrifizierten Abgasturboladers gespeist werden. Alternativ oder in Kombination kann die zweite Elektromaschine vom elektrischen Energiespeicher mit elektrischer Leistung versorgt werden. Die zweite Elektromaschine kann zur Leistungsversorgung mit dem elektrischen Energiespeicher verbunden oder verbindbar sein.

Die zweite Elektromaschine kann ferner zur Rekuperation von Bewegungsenergie (beispielsweise von Bewegungsenergie eines Kraftfahrzeugs) wahlweise generatorisch betreibbar sein. Der elektrische Energiespeicher kann mit der zweiten Elektromaschine verbunden oder verbindbar sein zum Speichern von mittels der zweiten Elektromaschine rekuperierter Bewegungsenergie.

Im Abgasstrom der Brennkraftmaschine kann ein Wastegate angeordnet sein. Das Wastegate kann ein Bypassventil zur Umgehung der Turbine des elektrifizierten Abgasturboladers umfassen.

Die Steuerungseinheit kann ferner dazu ausgebildet sein, in einem Teil des zweiten Lastbereichs, der höheren Lasten innerhalb des zweiten Lastbereichs entspricht, das Wastegate zu öffnen. Die Steuerungseinheit kann das Wastegate soweit öffnen, dass die von der Elektromaschine des Abgasturboladers im generatorischen Betrieb umgesetzte Leistung einer vorbestimmten Höchstleistung entspricht.

Gemäß einem weiteren Aspekt ist ein Fahrzeug, beispielsweise ein Landfahrzeug oder ein Wasserfahrzeug bereitgestellt, das eine Brennkraftmaschine gemäß einer Ausführung des Vorrichtungsaspekts umfasst. Das Landfahrzeug kann ein Personenkraftwagen, Nutzfahrzeug (beispielsweise ein Bus, ein Lastkraftwagen, eine Zugmaschine oder eine Agrarmaschine) sein.

Weitere Merkmale und Vorteile der Erfindung werden im Folgenden unter Bezugnahme auf die beigefügten Zeichnungen beschrieben. Es zeigten:
- Figur 1: ein schematisches Blockschaltbild eines Ausführungsbeispiels der Brennkraftmaschine;
- Figur 2: ein schematisches Diagramm der Ventilschließzeiten gemäß verschiedener Ausführungsbeispiele; und
- Figur 3: ein schematisches Diagramm mit verschiedenen Leistungsbereichen der Brennkraftmaschine gemäß einer mit jedem Ausführungsbeispiel kombinierbaren Implementierung.

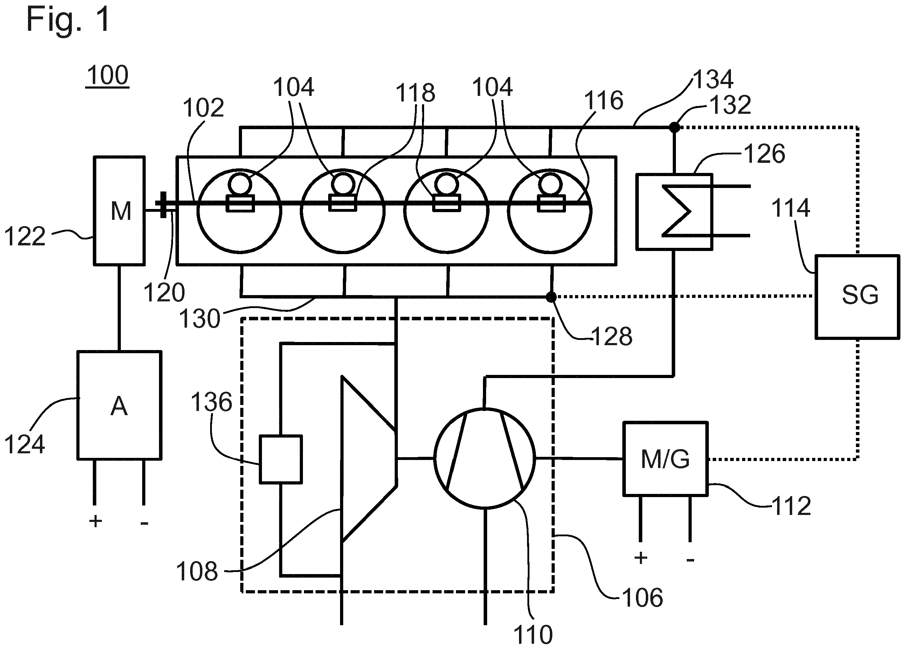

Figur 1 zeigt ein schematisches Blockschaltbild eines Ausführungsbeispiels einer allgemein mit Bezugszeichen 100 bezeichneten Brennkraftmaschine. Die Brennkraftmaschine 100 umfasst eine Ventilsteuerung 102, die zumindest Einlassventile 104 der Brennkraftmaschine 100 außerhalb des UT, zu Miller'schen oder Atkinson'schen Schießzeiten, schließt. Ferner umfasst die Brennkraftmaschine 100 einen elektrifizierten Abgasturbolader 106 mit einer Turbine 108, einem Verdichter 110 und einer Elektromaschine 112. Die Elektromaschine 112 des elektrifizierten Abgasturboladers 106 ist wahlweise motorisch oder generatorisch betreibbar, weshalb diese auch als Elektromotor-Generator-Einheit bezeichnet werden kann. Ferner umfasst die Brennkraftmaschine 100 eine Steuerungseinheit 114 zur Steuerung des Betriebs der Elektromaschine 112 des elektrifizierten Abgasturboladers 106. Gemäß der Steuerungseinheit 114 ist in einem ersten Lastbereich der Brennkraftmaschine 100 die Elektromaschine 112 zumindest zeitweise motorisch betrieben. Beispielsweise kann die Elektromaschine 112 im ersten Lastbereich mit einer variablen motorischen Leistung betrieben sein. Falls keine elektromotorische Unterstützung des Antriebs des Verdichters 110 durch die Turbine 108 notwendig ist, kann die Elektromaschine 112 mechanisch und/oder elektrisch entkoppelt sein. In einem zweiten Lastbereich, der größere Lasten der Brennkraftmaschine 100 als der erste Lastbereich umfasst, ist die Elektromaschine 112 zumindest zeitweise generatorisch betrieben.

Die durch die Ventilsteuerung 102, beispielsweise eine Nockenwelle 116 mit festem Nocken 118, festgelegten Schließzeiten sind über die Lastbereiche unveränderlich. Die Ventilsteuerung 102 und die Einlassventile 104 werden auch als Einlasssystem bezeichnet. Der Querschnitt der Abgasturbine 108 ist so bemessen, dass eine ausreichende Luftversorgung der Brennkraftmaschine 100 im ersten Leistungsbereich (beispielsweise bei geringen bis mittleren Leistungen der Brennkraftmaschine 100) ohne elektrische Unterstützung durch die Elektromaschine 112 gewährleistet ist. Im zweiten Leistungsbereich würde (beispielsweise bei höheren Leistungen) durch den (beispielsweise im Verhältnis zum Abgasstrom der Brennkraftmaschine 100 relativ) engen Querschnitt der Abgasturbine 108 der Abgasdruck vor dem Eintritt in die Turbinen 108 stark ansteigen. Dem wirkt der generatorische Betrieb der Elektromaschine 112 des elektrifizierten Abgasturboladers 106 entgegen. Insbesondere wird überschüssige mechanische Energie der Abgasturbine 108 im generatorischen Betrieb durch die Elektromaschine 112 in elektrische Energie umgesetzt.

Hierzu kann die Brennkraftmaschine 100 einen elektrischen Energiespeicher 124 und/oder eine zweite Elektromaschine 122 umfassen. Die zweite Elektromaschine 122 ist abtriebsseitig mit der Brennkraftmaschine 100, beispielsweise einer Kurbelwelle 120 der Brennkraftmaschine 100, verbunden. Die überschüssige Energie der Abgasturbine 108 wird dem elektrischen Energiespeicher 124 zugeführt und/oder über die zweite Elektromaschine 122 in einem parallelen Hybridbetrieb zusammen mit einer mechanischen Ausgangsleistung der Brennkraftmaschine 100 abgegeben.

Beim Einsatz der Brennkraftmaschine 100 in einem Fahrzeug kann die überschüssige Energie der Abgasturbine 108 an einen Antriebsstrang des Fahrzeugs abgegeben werden. Die Brennkraftmaschine 100 im engeren Sinn, d.h. der Verbrennungsmotor ohne den Beitrag der zweiten Elektromaschine 122, ist beispielsweise der Hauptantrieb des Fahrzeugs.

Im ersten Leistungsbereich ist die Elektromaschine 112 allenfalls motorisch betrieben. Vorzugsweise bewirkt die Steuerungseinheit 114 im ersten Leistungsbereich eine vom bestehenden Abgasdruck unabhängige Aufladung durch Steuern des motorischen Betriebs der Elektromaschine 112.

Im zweiten Leistungsbereich ist die Elektromaschine 112 zumindest zeitweise generatorisch betrieben. Die Steuerung des Betriebs der Elektromaschine 112 kann im zweiten Leistungsbereich der Brennkraftmaschine 100 zwischen einem ersten Teilbereich und einen zweiten Teilbereich, der geringeren Leistungen der Brennkraftmaschine 100 entspricht, differenzieren. Im ersten Teilbereich steigt mit steigender Leistung der Brennkraftmaschine 100 die generatorisch umgesetzte elektrische Leistung an. Im zweiten Teilbereich ist die Generatorleistung der Elektromaschine 112 im generatorischen Betrieb auf eine Maximalleistung begrenzt. Ein weiterer Anstieg des Abgasdrucks wird durch ein Wastegate 136 oder gegebenenfalls durch das Öffnen einer Turbinen-Verstellgeometrie der Abgasturbine 108 verhindert.

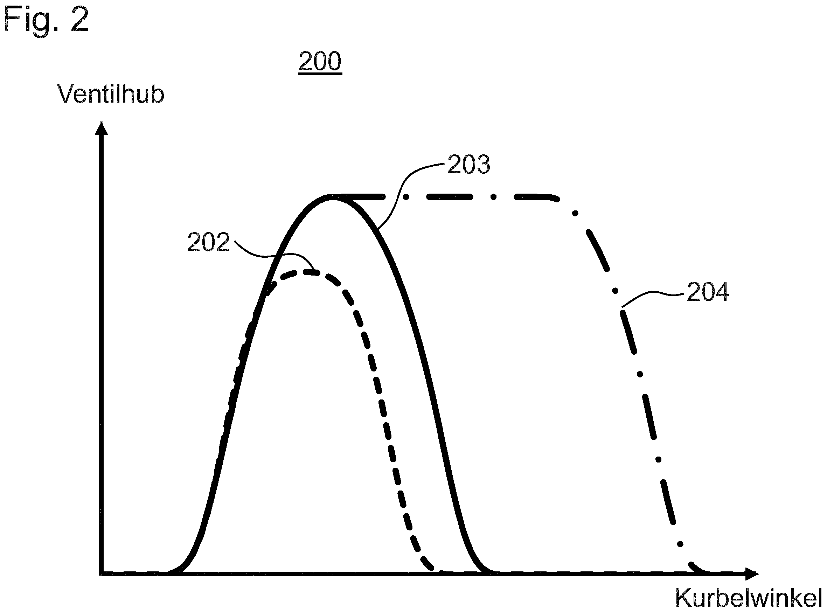

Figur 2 zeigt in einem schematischen Diagramm 200 Miller'sche und Atkinson'sche Schließzeiten gemäß verschiedenen Ausführungsvarianten 202 bzw. 204 der Ventilsteuerung 102. Eine Winkelstellung der Kurbelwelle 120 ist auf der horizontalen Achse abgetragen. Ein durch den Nocken 118 bewirkter Ventilhub ist auf der vertikalen Achse abgetragen.

Das Einlasssystem der Brennkraftmaschine 100 weist feste Steuerzeit für das Schließen (kurz: Schließzeit) der Einlassventile 104 im Ansaugtakt auf, d.h. invariable Schließzeiten. Das Diagramm 200 zeigt ferner das Vergleichsbeispiel 203 einer herkömmlichen füllungsoptimierten Auslegung der Schließzeit. Gegenüber dem füllungsoptimierten Vergleichsbeispiel 203 ergibt sich die Schließzeit als früherer Schließzeitpunkt einer Einlasshubkurve mit Miller'schen Schließzeiten der Ausführungsvariante 202 oder als späterer Schließzeitpunkt einer Einlasshubkurve mit Atkinson'schen Schließzeiten der Ausführungsvariante 204.

Der Abgasturbolader 106 umfasst die Abgasturbine 108 und den Verdichter 110 und ist mit der Elektromaschine 112 gekoppelt. Die verdichtete Ladeluft gelangt über einen Ladeluftkühler 126 zum Einlasssystem. Die Steuerungseinheit 114 verarbeitet (u.a.) das Signal eines Drucksensors 128 im Auslasskrümmer 130 vor der Turbine 108 und/oder eines Drucksensors 132 im Ladeluftrohr 134 (vorzugsweise stromabwärts des Ladeluftkühlers 126). Alternativ oder ergänzend zum Drucksensor 128 können im Abgaskrümmer 130 (oder an anderer Stelle) Sensoren zur Ermittlung des Verbrennungsluftverhältnisses angeordnet sein, deren Signale von der Steuerungseinheit 114 erfasst werden.

Überschreitet der gemessene Druck, das gemessene Verbrennungsluftverhältnis oder ein aus den Signalen abgeleiteter Wert einen (beispielsweise über ein Kennfeld zum Betriebszustand der Brennkraftmaschine 100) vorgegebenen Maximalwert oder Sollwert, so geht von der Steuerungseinheit 114 ein Signal für den generatorischen Betrieb an die Elektromaschine 112, welche den Läufer des Abgasturboladers 106 generatorisch bremst, bis der gemessene oder abgeleitete Wert unter den Maximalwert fällt oder den Sollwert annimmt.

Der so erzeugte Strom wird dem elektrischen Energiespeicher 124 zugeführt oder versorgt direkt den mit dem Antriebsstrang verbundenen Elektromotor 122.

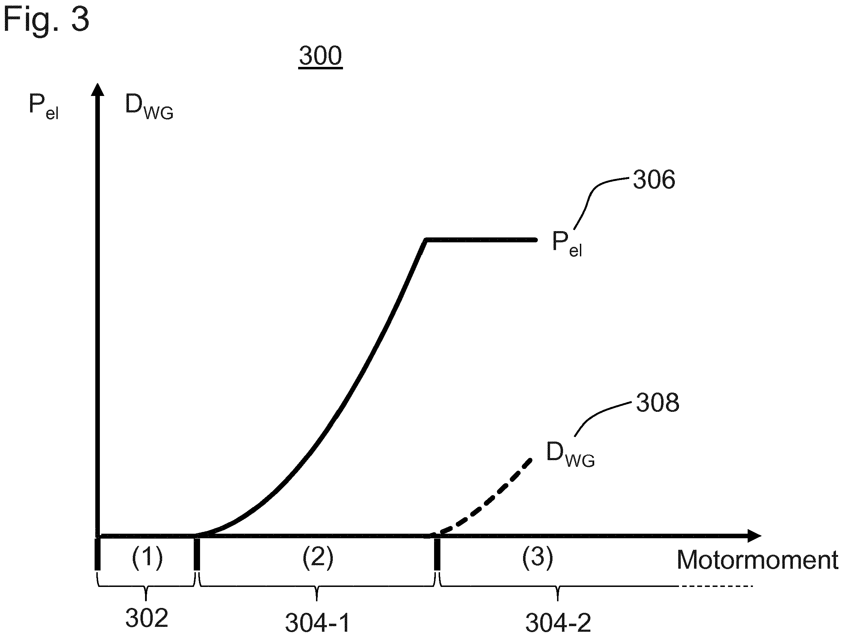

Figur 3 zeigt ein schematisches Diagramm 300 verschiedener Betriebsmodi in verschiedenen Lastbereichen. Die Lastbereiche sind auf der horizontalen Achse des Diagramms 300 abgetragen, beispielsweise als Drehmoment der Brennkraftmaschine 100. Um die Anzahl der Parameter für die Unterscheidung der Lastbereiche übersichtlich zu halten, kann die Kurve in Figur 3 das prinzipielle Verhalten der Steuerungseinheit 114 bei einer (beispielsweise typischen oder mittleren) Drehzahl darstellen. Insofern wird hier zur Klarheit der Darstellung, und ohne Beschränkung der technischen Lehre, nicht weiter zwischen den Begriffen Last, Drehmoment und Leistung differenziert. Eine weitergehende Differenzierung verschiedener Betriebsmodi mittels eines höherdimensionalen Kennfelds (beispielsweise als Funktion von Drehmoment und Drehzahl) ist für den Fachmann unmittelbar umsetzbar. Die konkreten Werte eines solchen Kennfelds können sich für verschiedene Drehzahlen ändern.

Im ersten Lastbereich 302 werden die Kennfeld-Sollwerte für den Druck und/oder das Verbrennungsluftverhältnis noch nicht erreicht, deshalb findet kein generatorisches Bremsen statt. Dieses erfolgt erst im zweiten Lastbereich, wobei im unteren Teilbereich 304 des zweiten Lastbereichs die elektrische Leistung 306 mit zunehmendem Drehmoment bis zu einem vorgegebenen Maximalwert ansteigt. Ist dieser erreicht, öffnet im oberen Teilbereich 304-2 des zweiten Lastbereichs das Wastegate 136 (dessen Öffnungsquerschnitt 308 schematisch im Diagramm 300 gezeigt ist) oder eine verstellbare Turbinengeometrie, um die erzeugte elektrische Leistung 306 bis zum Erreichen des maximalen Drehmoments nicht über den Maximalwert steigen zu lassen.

Für den Fachmann sind, insbesondere anhand vorstehender Ausführungsbeispiel, Vorteile der Brennkraftmaschine ersichtlich. So sind ohne komplexe variable Ventilsteuerungen die Vorteile der Miller'schen oder Atkinson'schen Schließzeiten realisierbar, insbesondere hinsichtlich der verringerten Druckbelastung bei sehr hohen spezifischen Leistungen. Die beschriebene Technik ermöglicht diese Schließzeiten ohne ein aufwändiges Nockenverstellsystem, wie es sonst aufgrund des ungünstigeren Verhaltens im Teillastbetrieb und der geringeren Dynamik erforderlich ist.

Ein weiterer Vorteil der mittels der Technik erreichbaren Miller'schen oder Atkinson'schen Schließzeiten ist eine Absenkung der Stickoxidemission. Diese Wirkung ist vergleichbar mit einer mild eingesetzten Abgasrückführung (AGR), auf die in diesem Fall verzichtet werden kann. Durch den Wegfall eines variablen Ventiltriebs und der AGR-Strecke ergibt sich ein deutlich geringerer baulicher Aufwand der Brennkraftmaschine.

Ferner können sich durch den Wegfall der AGR die Temperaturen nach der Turbine bzw. vor Eintritt in eine Abgasnachbehandlung (AGN) erhöhen. Damit kann insbesondere bei niedrigen Mitteldrücken die Wirkung der AGN verbessert werden. Alternativ oder in Kombination hierzu kann in Teilen des Betriebsbereichs, beispielsweise unter der Voraussetzung guter Wirkungsgrade der elektrischen und aufladetechnischen Komponenten, eine Senkung des spezifischen Kraftstoffverbrauchs erzielt werden. Dazu kann über höhere Stickoxid-Rohemissionen auch die verbesserte Wirkung der AGN beitragen, beispielsweise da die verbesserte Wirkung der AGN höhere Stickoxid-Rohemissionen zulässt. Diese treten z. B. dann auf, wenn der Einspritzbeginn zu früheren Zeiten verschoben wird, was im Normallfall mit einem besseren Wirkungsgrad des Hochdruckprozesses einhergeht. Die Technik kann somit eine herkömmlicherweise bestehende Abwägung (entweder weniger Stickoxid-Rohemission oder weniger Kraftstoffverbrauch) auflösen.

### Bezugszeichenliste

- 100: Brennkraftmaschine
- 102: Ventilsteuerung der Brennkraftmaschine
- 104: Einlassventile der Brennkraftmaschine
- 106: Abgasturbolader der Brennkraftmaschine
- 108: Turbine des elektrifizierten Abgasturboladers
- 110: Verdichter des elektrifizierten Abgasturboladers
- 112: Elektromaschine des elektrifizierten Abgasturboladers
- 114: Steuerungseinheit
- 116: Nockenwelle
- 118: Nocken
- 120: Kurbelwelle der Brennkraftmaschine
- 122: Elektromaschine an der Kurbelwelle
- 124: Elektrischer Energiespeicher
- 126: Ladeluftkühler
- 128: Abgas-Drucksensor
- 130: Abgaskrümmer
- 132: Ladeluft-Drucksensor
- 134: Ladeluftrohr
- 136: Wastegate
- 200: Schließzeiten-Diagramm
- 202: Miller'sche Schließzeiten
- 203: Vergleichsbeispiel
- 204: Atkinson'sche Schließzeiten
- 300: Betriebsmodi-Diagramm
- 302: Erster Lastbereich
- 304-1: Unterer Teilbereich des zweiten Lastbereichs
- 304-2: Oberer Teilbereich des zweiten Lastbereichs
- 306: Abgegebene Leistung des Abgasturboladers
- 308: Öffnungsquerschnitt des Wastegates

## Patentansprüche

1. Brennkraftmaschine (100), umfassend:
eine Ventilsteuerung (102), die dazu ausgebildet ist, Einlassventile (104) der Brennkraftmaschine (100) zu Miller'schen oder Atkinson'schen Schließzeiten zu schließen, wobei die Schließzeiten der Ventilsteuerung (102) unveränderlich sind;
einen elektrifizierten Abgasturbolader (106) mit einer Elektromaschine (112), die wahlweise motorisch oder generatorisch betreibbar ist; und
eine Steuerungseinheit (114), die dazu ausgebildet ist, die Elektromaschine (112) des elektrifizierten Abgasturboladers (106) in einem ersten Lastbereich der Brennkraftmaschine (100) motorisch zu betreiben und in einem zweiten Lastbereich, der größeren Lasten der Brennkraftmaschine (100) als der erste Lastbereich entspricht, generatorisch zu betreiben,
**dadurch gekennzeichnet, dass** die Ventilsteuerung (102) eine von einer Kurbelwelle (120) der Brennkraftmaschine (100) angetriebene Nockenwelle (116) umfasst, welche die Schließzeiten bestimmt, wobei die Nockenwelle (116) die Schließzeiten für den gesamten Lastbereich der Brennkraftmaschine (100) einheitlich festlegt, wobei die Steuerungseinheit (114) dazu ausgebildet ist, die Elektromaschine (112) des elektrifizierten Abgasturboladers (106) im ersten Lastbereich nicht generatorisch zu betreiben und die Elektromaschine (112) des elektrifizierten Abgasturboladers (106) ausschließlich im zweiten Lastbereich generatorisch zu betreiben.

2. Brennkraftmaschine nach Anspruch 1, wobei der Abgasturbolader (106) einen Verdichter (110) und eine den Verdichter (110) antreibende Turbine (108) umfasst, die dazu ausgelegt sind, einen Ladedruck zu erzeugen, der ein aufgrund der Schließzeiten gegenüber dem Hubraum verringertes Ladevolumen im ersten Lastbereich der Brennkraftmaschine kompensiert.

3. Brennkraftmaschine nach Anspruch 2, wobei ein Turbinenquerschnitt der Turbine (108) derart bemessen ist und/oder eine Turbinengeometrie der Turbine (108) derart geformt ist, dass der Abgasturbolader (106) im ersten Lastbereich das durch die Schließzeiten verringerte Ladevolumen durch den Ladedruck kompensiert.

4. Brennkraftmaschine nach Anspruch 2 oder 3, wobei die Turbine (108), insbesondere der Turbinenquerschnitt und/oder die Turbinengeometrie, unveränderlich ist.

5. Brennkraftmaschine nach Anspruch 3 oder 4, wobei die Steuerungseinheit (114) dazu ausgebildet ist, im zweiten Lastbereich eine mechanische Leistung der Turbine (108), welche über die durch den Verdichter (110) zur Kompensation benötigte Leistung hinausgeht, mittels der generatorisch betriebenen Elektromaschine (112) umzusetzen.

6. Brennkraftmaschine nach einem der Ansprüche 2 bis 5, wobei die Elektromaschine (112) des Abgasturboladers (106) starr mit der Turbine (108) des Abgasturboladers (106) gekoppelt ist.

7. Brennkraftmaschine nach einem der Ansprüche 1 bis 6, wobei die Brennkraftmaschine (100) ferner einen wiederaufladbaren Energiespeicher (124) umfasst, welcher mit der Elektromaschine des elektrifizierten Abgasturboladers (106) zum Speichern der im generatorischen Betrieb abgegebenen elektrischen Energie verbunden oder verbindbar ist.

8. Brennkraftmaschine nach einem der Ansprüche 1 bis 7, wobei die Brennkraftmaschine (100) ferner eine zweite Elektromaschine (122) umfasst, die als Kraftmaschine dazu ausgebildet ist, die vom elektrifizierten Abgasturbolader im zweiten Leistungsbereich abgegebene elektrische Energie umzusetzen.

9. Brennkraftmaschine nach Anspruch 7 und 8, wobei die zweite Elektromaschine (122) zur Leistungsversorgung mit dem elektrischen Energiespeicher (124) verbunden oder verbindbar ist.

10. Brennkraftmaschine nach Anspruch 8 oder 9, wobei die Steuerungseinheit (114) ferner dazu ausgebildet ist, die zweite Elektromaschine (122) zur Leistungsversorgung durch die generatorisch betriebene Elektromaschine (112) des elektrifizierten Abgasturboladers (106) mit dieser zu verbinden.

11. Brennkraftmaschine nach einem der Ansprüche 1 bis 10, wobei im Abgasstrom der Brennkraftmaschine (100) ein Wastegate (136) angeordnet ist, und die Steuerungseinheit (114) ferner dazu ausgebildet ist, in einem Teil (304-2) des zweiten Lastbereichs, der höhen Lasten innerhalb des zweiten Lastbereichs entspricht, das Wastegate (136) zu öffnen.

12. Kraftfahrzeug, insbesondere Nutzfahrzeug, das eine Brennkraftmaschine (100) nach einem der Ansprüche 1 bis 11 umfasst.

## Claims

1. An internal combustion engine (100) comprising:
a valve controller (102) which is configured to close inlet valves (104) of the internal combustion engine (100) at Miller or Atkinson closing times, wherein the closing times of the valve controller (102) are invariable;
an electrified exhaust-gas turbocharger (106) having an electric machine (112) which is operable selectively as a motor or generator; and
a control unit (114) which is configured to operate the electric machine (112) of the electrified exhaust-gas turbocharger (106) as a motor in a first load range of the internal combustion engine (100) and to operate same as a generator in a second load range which corresponds to greater loads of the internal combustion engine (100) than the first load range,
**characterized in that** the valve controller (102) comprises a camshaft (116) driven by a crankshaft (120) of the internal combustion engine (100), said camshaft (116) determining the closing times,
wherein the camshaft (116) sets the closing times in a uniform manner for the entire load range of the internal combustion engine (100), wherein the control unit (114) is configured to not operate the electric machine (112) of the electrified exhaust-gas turbocharger (106) as a generator in the first load range and to operate the electric machine (112) of the electrified exhaust-gas turbocharger (106) as a generator only in the second load range.

2. The internal combustion engine according to Claim 1, wherein the exhaust-gas turbocharger (106) comprises a compressor (110) and a turbine (108) driving the compressor (110), which are designed to generate a charge pressure that compensates a charging volume, reduced with respect to the displacement on account of the closing times, in the first load range of the internal combustion engine.

3. The internal combustion engine according to Claim 2, wherein a turbine cross section of the turbine (108) is dimensioned and/or a turbine geometry of the turbine (108) is shaped such that the exhaust-gas turbocharger (106) compensates the charging volume, reduced by the closing times, by the charge pressure in the first load range.

4. The internal combustion engine according to Claim 2 or 3, wherein the turbine (108), in particular the turbine cross section and/or the turbine geometry, is invariable.

5. The internal combustion engine according to Claim 3 or 4, wherein the control unit (114) is configured to convert a mechanical power of the turbine (108), which goes beyond the power required by the compressor (110) for compensation, by means of the electric machine (112) operated as a generator, in the second load range.

6. The internal combustion engine according to one of Claims 2 to 5, wherein the electric machine (112) of the exhaust-gas turbocharger (106) is rigidly coupled to the turbine (108) of the exhaust-gas turbocharger (106).

7. The internal combustion engine according to one of Claims 1 to 6, wherein the internal combustion engine (100) also comprises a rechargeable energy store (124) which is connected or connectable to the electric machine of the electrified exhaust-gas turbocharger (106) in order to store the electrical energy output during operation as a generator.

8. The internal combustion engine according to one of Claims 1 to 7, wherein the internal combustion engine (100) also comprises a second electric machine (122), which is configured as a power machine in order to convert electrical energy output by the electrified exhaust-gas turbocharger in the second power range.

9. The internal combustion engine according to Claims 7 and 8, wherein the second electric machine (122) is connected or connectable to the electrical energy store (124) for power supply.

10. The internal combustion engine according to Claim 8 or 9, wherein the control unit (114) is also configured to connect the second electric machine (122) to the electric machine (112), operated as a generator, of the electrified exhaust-gas turbocharger (106) for power supply by said electric machine (112).

11. The internal combustion engine according to one of Claims 1 to 10, wherein a wastegate (136) is arranged in the exhaust-gas flow of the internal combustion engine (100), and the control unit (114) is also configured to open the wastegate (136) in a part (304-2) of the second load range which corresponds to high loads within the second load range.

12. A motor vehicle, in particular a commercial vehicle, which comprises an internal combustion engine (100) according to one of Claims 1 to 11.

## Revendications

1. Moteur à combustion interne (100), comprenant :
une commande de soupape (102) qui est configurée pour fermer les soupapes d'admission (104) du moteur à combustion interne (100) à des moments de fermeture de Miller ou d'Atkinson, les moments de fermeture de la commande de soupape (102) étant invariables ;
un turbocompresseur des gaz d'échappement électrifié (106) pourvu d'une machine électrique (112), qui peut fonctionner au choix en moteur ou en générateur ; et
une unité de commande (114), qui est configurée pour faire fonctionner la machine électrique (112) du turbocompresseur des gaz d'échappement électrifié (106) en moteur dans une première plage de charge du moteur à combustion interne (100) et la faire fonctionner en générateur dans une deuxième plage de charge, qui correspond à des charges plus élevées du moteur à combustion interne (100) que la première plage de charge,
**caractérisé en ce que** la commande de soupape (102) comporte un arbre à cames (116) entraîné par un vilebrequin (120) du moteur à combustion interne (100),
lequel détermine les moments de fermeture, l'arbre à cames (116) fixant uniformément les moments de fermeture pour la totalité de la plage de charge du moteur à combustion interne (100), l'unité de commande (114) étant configurée pour ne pas faire fonctionner la machine électrique (112) du turbocompresseur des gaz d'échappement électrifié (106) en générateur dans une première plage de charge et faire fonctionner la machine électrique (112) du turbocompresseur des gaz d'échappement électrifié (106) en générateur dans la deuxième plage de charge.

2. Moteur à combustion interne selon la revendication 1, le turbocompresseur des gaz d'échappement (106) comportant un compresseur (110) et une turbine (108) qui entraîne le compresseur (110), lesquels sont conçus pour générer une pression de charge qui compense, dans la première plage de charge du moteur à combustion interne, un volume de charge réduit par rapport à la cylindrée en raison des moments de fermeture.

3. Moteur à combustion interne selon la revendication 2, une section transversale de turbine de la turbine (108) étant dimensionnée de telle sorte et/ou une géométrie de turbine de la turbine (108) étant façonnée de telle sorte que le turbocompresseur des gaz d'échappement (106), dans la première plage de charge, compense le volume de charge réduit par les moments de fermeture.

4. Moteur à combustion interne selon la revendication 2 ou 3, la turbine (108), notamment la section transversale de turbine et/ou la géométrie de turbine, étant invariable.

5. Moteur à combustion interne selon la revendication 3 ou 4, l'unité de commande (114) étant configurée pour, dans la deuxième plage de charge, convertir une puissance mécanique de la turbine (108), laquelle va au-delà de la puissance requise par le compresseur (110) pour la compensation, au moyen de la machine électrique (112) fonctionnant en générateur.

6. Moteur à combustion interne selon l'une des revendications 2 à 5, la machine électrique (112) du turbocompresseur des gaz d'échappement (106) étant couplée de manière rigide à la turbine (108) du turbocompresseur des gaz d'échappement (106).

7. Moteur à combustion interne selon l'une des revendications 1 à 6, le moteur à combustion interne (100) comportant en outre un accumulateur d'énergie (124) rechargeable, lequel est relié ou peut être relié à la machine électrique du turbocompresseur des gaz d'échappement (106) électrifié pour accumuler l'énergie électrique délivrée dans le fonctionnement en générateur.

8. Moteur à combustion interne selon l'une des revendications 1 à 7, le moteur à combustion interne (100) comportant en outre une deuxième machine électrique (122) qui, en tant que machine motrice, est configurée pour convertir l'énergie électrique délivrée par le turbocompresseur des gaz d'échappement électrifié dans la deuxième plage de puissance.

9. Moteur à combustion interne selon les revendications 7 et 8, la deuxième machine électrique (122) étant reliée ou pouvant être reliée à l'accumulateur d'énergie (124) électrique pour l'alimentation en puissance.

10. Moteur à combustion interne selon la revendication 8 ou 9, l'unité de commande (114) étant en outre configurée pour relier la deuxième machine électrique (122) à la machine électrique (112) du turbocompresseur des gaz d'échappement (106) en vue de l'alimentation en puissance par celle-ci.

11. Moteur à combustion interne selon l'une des revendications 1 à 10, une soupape de décharge (136) étant disposée dans le flux de gaz d'échappement du moteur à combustion interne (100), et l'unité de commande (114) étant en outre configurée pour ouvrir la soupape de décharge (136) dans une partie (304-2) de la deuxième plage de charge, laquelle correspond aux charges élevées à l'intérieur de la deuxième plage de charge.

12. Véhicule automobile, notamment véhicule utilitaire, qui comprend un moteur à combustion interne (100) selon l'une des revendications 1 à 11.
